# EUROPEAN PATENT SPECIFICATION

(11) **EP 1 959 858 B1**
(45) Date of publication and mention of the grant of the patent: **16.02.2011**
(21) Application number: 06821786.8
(22) Date of filing: 17.11.2006
(51) Int. Cl.: A61C 7/20

(54) **DIFFERENTIAL ARCHWIRE**
DIFFERENTIAL-BOGENDRAHT
FIL METALLIQUE EN ARC DIFFERENTIEL

(30) Priority: 12.12.2005 IT TV20050194
(43) Date of publication of application: 27.08.2008
(73) Proprietor: Cantarella, Daniele, 31040 Nervesa (IT)
(72) Inventor: Cantarella, Daniele, 31040 Nervesa (IT)
(74) Representative: Modiano, Micaela Nadia
(86) International application number: PCT/IT2006/000803
(87) International publication number: WO 2007/069286

(56) References cited:
- EP-A- 1 092 398
- US-A- 4 412 819
- US-A- 4 892 479
- US-A1- 2002 172 910
- US-A1- 2004 029 067

## Description

### TECHNICAL FIELD AND BACKGROUND OF THE INVENTION

The present invention relates to an archwire to be utilized as a component of fixed orthodontic appliances.

It is known that orthodontic appliances are utilized to move teeth along the three planes of the space. Fixed orthodontic appliances include a series of brackets glued to the teeth, and archwires secured to the slot present in the brackets. Brackets having slots with rectangular cross-sectional shape are called "edgewise", and they are the ones most frequently used today. The forces used to move the teeth are generated by coil springs or elastic chains attached to the brackets, or by closing loops modeled on the arch wires.

In many phases of the orthodontic treatment it is necessary to move the incisors of the upper dental arch backwards. This movement is often encountered in the final phase of the treatment of the malocclusion of second class, characterized by the fact that the upper dental arch is positioned too far mesially in relation to the lower dental arch. The distalizing class I force used to move the upper incisors backwards is generated by elastic chains or coil springs running from the molars to the incisors, or by closing loops modeled on the arch wires.

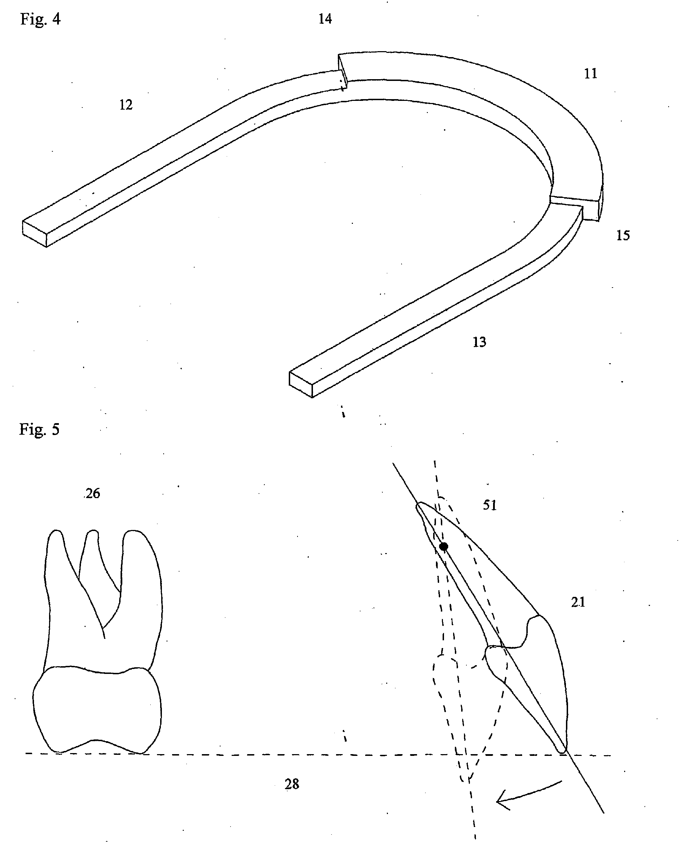

Up to date there are two techniques used to move the incisors backwards: techniques that utilize sliding mechanics, and techniques that utilize non-frictioning mechanics. Sliding mechanics is the basis of the "straight wire technique". An arch wire with costant cross-sectional size on all teeth is utilized. Slots of the brackets have the same cross-sectional dimension on all teeth. A backward force is generated by elastic chains or coils running from incisors to molars. As incisors retract, the arch wire slides through the slots of the brackets of canines, premolars, molars. The critical point of this technique is the cross-sectional size of the arch wire. An arch wire with small cross sectional size slides well along the brackets of posterior teeth, but it gives no control to the bucco-lingual inclination of the incisors during their retraction. In fact the wire has too much play and is free to rotate inside the slots of the brackets of the incisors. As a consequence, during the retraction, incisors rotate around a center of resistance 21 placed at the apical third of the root, and become more upright. This effect is negative because this way upper incisors end up hitting the lower incisors (fig. 5).

On the other hand, an archwire with big cross-sectional size gives good control to the bucco-lingual inclination of the incisors during their retraction, but it generates too much friction on the brackets of the posterior teeth, hampering the sliding of the arch wire along the brackets of posterior teeth.

The "Bidimensional technique" utilizes sliding mechanics, and it has been introduced with the aim to solve the above-cited problem. In the "bidimensional technique" the slots of the brackets of the inciors have cross-sectional size 0,46 by 0,64 mm (0.018 by 0.025 inches), and the slots of the brackets of canines, premolars and molars have cross-sectional size 0,56 by 0,71mm (0.022 by 0.028 inches). The arch wire used to retract the incisors has cross-sectional size 0,46 by 0,56 mm (0.018 by 0.022 inches). This arch wire fills completely the slots of the incisors, assuring good control of the bucco-lingual inclination (torque) of the incisors during their retraction. At the same time this arch wire with cross-sectional size 0,46 by 0,56 mm (0.018 by 0.022 inches) has a lot of play inside the slots of canines, premolars and molars, assuring low friction and good sliding of the wire along these brackets. The main drawback of the "bidimensional technique" is that the thickest arch wire that can be utilized has cross-sectional size 0,46 by 0,56 mm (0.018 by 0.022 inches), because the brackets of the incisors have slots with height 0,46 mm (0.018 inches). This archwire cannot control the bucco-lingual inclination (torque) of the posterior teeth (canines, premolars, molars), which is important in other phases of the orthodontic treatment (for example during the repositioning of impacted canines or during the up-righting of linguo-inclined molars).

Wool in his patent (U.S. patent number 6,811,397) describes an orthodontic archwire characterized by an anterior segment with rectangular cross-section, that can have a good control of the bucco-lingual inclination of the incisors, and by two posterior segments with round cross-section that have the aim to reduce the friction between said posterior segments and the slot of the brackets of the posterior teeth. The main drawback of this design of archwire is that the round cross-section of the posterior segments doesn't generate enough rigidity of the archwire along the horizontal plane. As a consequence, the forces utilized to move the teeth cause the tipping of the posterior teeth towards the side of the tongue, and distort the shape of the dental arch. Foerster in his patent (German patent with title "torque-bogen", number DE4419471A1), describes an archwire with non-circular cross-section characterized by an anterior segment constituted by super-elastic material and possessing a torsional component. This torsional component has the aim to increase the torque of the roots of the incisors towards the palate, during the retraction of the incisors. The main drawback of this design is that the anterior segment, constitued by super-elastic material, doesn't generate enough rigidity of the archwire along the horizontal plane. As a consequence, the forces used to move the teeth backwards cause a tipping of the teeth towards the side of the tongue.

Chikami in his patent (patent number EP 1 092 398 A1) describes an orthodontic wire. However this wire is to be utilized as a retainer wire and is a removable appliance; it is not utilized as part of fixed orthodontic appliances.

Non-frictioning mechanics utilize closing loops modeled on the archwire in a position distal to the lateral incisors (see as a reference the U.S. patent number 5,131,843 by Hilgers). The archwire is positioned in the brackets, and the part of the archwire that is behind the bands of the molars is pulled backwards and blocked with a 90 degree bend. This way the closing loop is opened and activated. The closing loop, because of the elasticity of the material that constitutes the archwire, tends to close itself and to pull the incisors backwards. The archwire that is utilized has big cross-section size in order to fully engage into the slot of the brackets and to control the bucco-lingual inclination of the incisors. The problems associated with the closing loops are that the loops can irritate the cheeks and that they tend to trap food and plaque. Furthermore the activation of the loops and the removal of the archwire requires a lot of chair-time.

EP 1 092 398 A discloses a tooth retainer wire comprising: a front circular arc holding portion made of synthetic transparent resin for being thermally contacted about a user's front teeth; and metal wire supporting portions formed with and extending from both ends of the holding portion for being supported about a user's back teeth; the metal wire having a thinner cross-section than the front holding portion.

US 2004/029067 A1 discloses an orthodontic arch wire having a curved anterior section and a pair of posterior segments connected to and extending from respective ends of the curved anterior segment, whereby the curved anterior section and the pair of posterior segments comprise three discrete pieces having substantially the same flexural rigidity and being joined together to form a parabolic shape. The anterior section may have a circular cross-section combined with the posterior segments having a non-circular cross-section. Alternatively, the anterior section may have a non-circular cross-section combined with the posterior segments having a circular cross-section.

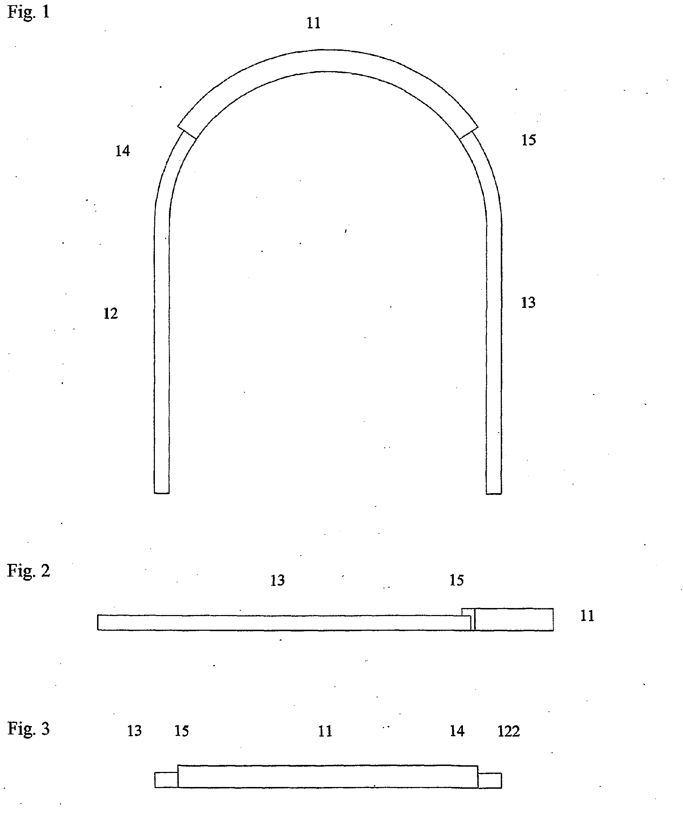

The objective of the present invention is an archwire, called "differential archwire", characterized by an anterior segment 11 with big cross-section area, and by two posterior segments 12,13 with smaller cross-section area (fig. 1,2,3,4). The "differential archwire" is to be utilized in association with pre-adjusted brackets today available on the market. The cross-section dimensions of the slots is the same in all the brackets. The shape of the cross-section of the anterior segment and of the posterior segments of the archwire is preferably, but not necessarily rectangular with the long side of the rectangle placed along the horizontal plane.

The "differential archwire" is used to retract the incisors. After the retraction of the incisors is completed, the archwire can be easily changed with little cost and with little chair-time by an archwire with a big cross-section area along the entire archwire, in order to have full control of the torque of the posterior teeth.

The material that constitutes the archwire is preferably, but not necessarily stainless steel.

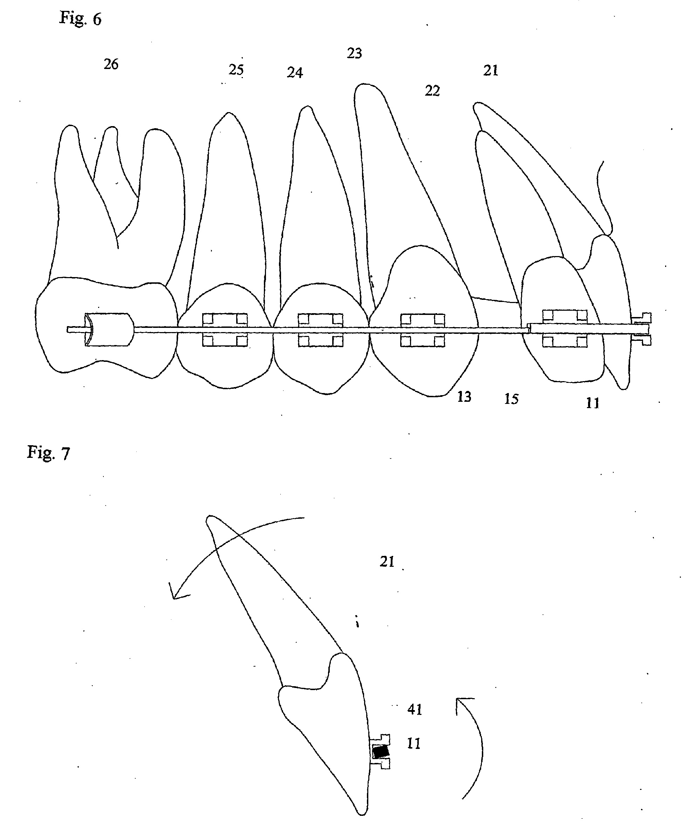

The anterior segment of the archwire 11 is inserted into the slots of the brackets of the central and lateral incisors, the posterior segments 12, 13 are inserted into the slots of the brackets of the canines, premolars and molars (fig.6). The anterior segment of the archwire has a big cross-section area, in order to completely fill the slot of the central and lateral incisors, and to generate a good control of the the bucco-lingual inclination of the incisors during their retraction. The interaction between the archwire with rectangular cross-section and the slot, also with rectangular cross-section, generates a couple of forces that pushes the roots of the incisors towards the palate (fig. 7). The final result that is obtained is the backward translation of the incisors (fig. 9).

The posterior segments have a smaller cross-section area, in order to allow them to slide with low friction along the brackets of the canines, premolars, molars.

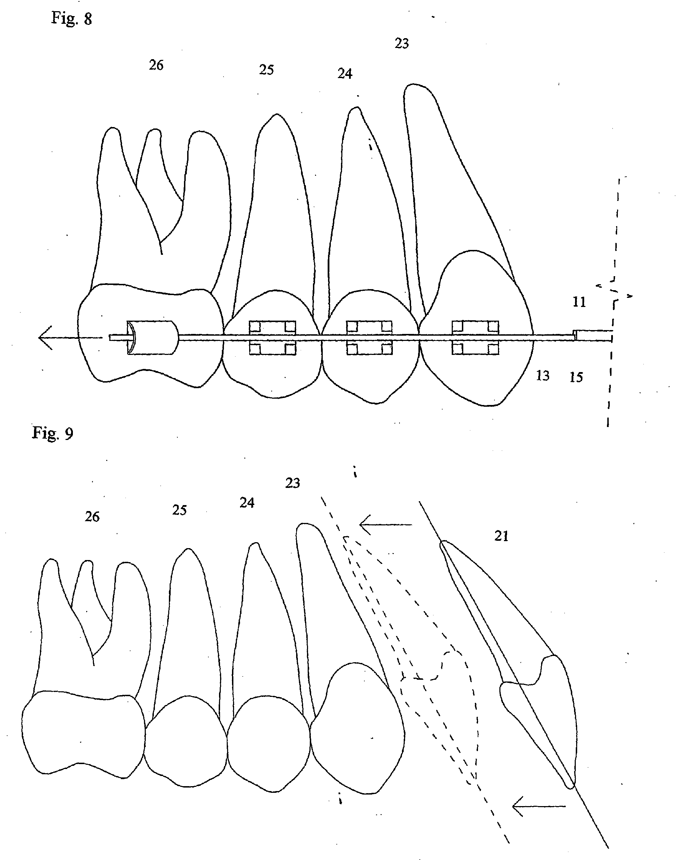

A force, generated by elastic chains or coil springs, is applied from the incisors to the molars. As incisors retract, the posterior segments of the archwire 12,13 characterized by the small cross-section area, slide along the brackets of canines, premolars and molars (fig.8).

Furthermore, it is known that the rigidity of an archwire is directly proportional to the cross-section area of the wire. As a consequence, the anterior segment 11 that is thicker, is also more rigid and this helps to control the inclination of the incisors during their retraction. The posterior segments 12,13 have a smaller cross-section area in order to generate big play between the archwire and the slots of the posterior teeth. This allows the wire to slide with low friction along the brackets of the canines, premolars and molars when the incisors are retracted (fig. 8). Also, the posterior segments with smaller cross-section area are more flexible. It is known that the friction generated by two surfaces that have to slide on one-another is directly proportional to the force applied to the surfaces. Thinner wires are more flexible and,when they are deflected, they give a lower force responce than the one given by thicker wires. The small cross-section area of the posterior segments helps them to slide with low friction along the brackets of the posterior teeth, also when these teeth are not perfectly aligned and deflect the posterior segments of the archwire.

For example, if we work with brackets with slots with dimensions 0,56 by 0,71 mm (0.022 by 0.028 inches) on all teeth, the "differential archwire" will have preferably but not necessarily, section 0,53 by 0,64 mm (0.021 by 0.025 inches), or 0,51 by 0,64 mm (0.020 by 0.025 inches) in the anterior segment 11; the posterior segments 12, 13 will have preferably, but not necessarily, section 0,46 by 0,56 mm (0.018 by 0.022 inches), or 0,43 by 0,56 mm (0.017 by 0.022 inches). If we work with brackets with slots of dimension 0,46 by 0,56 mm (0.018 by 0.022 inches) on all teeth, the differential archwire will preferably, but not exclusively, have section 0,46 by 0,56 mm (0.018 by 0.022 inches), or 0,43 by 0,64 mm (0.017 by 0.025 inches) in the anterior segment 11, and 0,41 by 0,51 mm (0.016 by 0.020 inches) or 0,41 by 0,46 mm (0.016 by 0.018 inches) in the posterior segments 12, 13.

The shape of the cross-section of the anterior segment 11 or of the posterior segments 12,13, or of all three segments can be a polygon (square, rectangle, octagon, hexagon), or a trapezium. The shape is preferably, but not necessarily, rectangular with the long side of the rectangle placed along the horizontal plane of the space (fig. 4). The forces that are utilized to close the spaces present in the dental arch are exerted over a semicircle. Hence, these forces have a centripetal component, and they tend to push the teeth towards the side of the tongue and to generate a decrease of the transverse diameter of the dental arches. The component that resists these centripetal forces is given by the rigidity of the archwire. For this reason it is preferable to use an archwire with rectangular cross-section with the long side of the rectangle placed along the horizontal plane. This shape of the cross-section of the archwire guarantees a higher rigidity of the archwire along the horizontal plane (fig. 4).

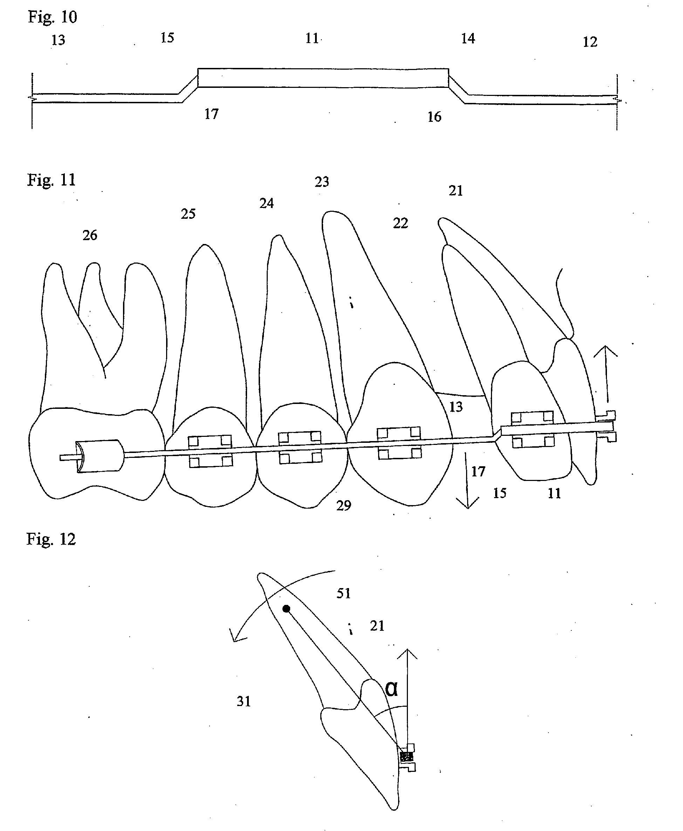

Sometimes the patient presents a big overlap of the upper incisors over the lower incisors (deep overbite). In these cases it is necessary to intrude the upper incisors before their retraction, in order to avoid interferences of the upper incisors with the lower incisors during the retraction. In order to accomplish this objective, a step can be created between the anterior segment 11, and the posterior segments 12,13 of the archwire. This step will be created preferably, but not necessarily, by means of two bends 16,17 placed one on each side in a position distal to the lateral incisors, in the transition point between anterior and posterior segments 14,15 (fig. 10). This step will intrude the incisors 21,22 and will extrude the posterior teeth 23, 24, 25, 26, creating a reduction of the overbite (fig. 11). The fact that the posterior segments of the archwire are thin and hence more flexible, helps to keep the force applied to the canine and the friction at low levels, and to allow the sliding of the archwire along the brackets of the posterior teeth.

This step, furthermore, generates a moment given by the intrusive force multiplied by the arm 31 and by the sine of the angle alpha delineated by the arm and the intrusion force (fig. 12). This happens because the point of application of the intrusion force is placed in a position that is buccal in relation to the center of resistance 51 of the tooth. This moment generates an increase of the buccal-crown torque of the incisors, that is very beneficial during their retraction.

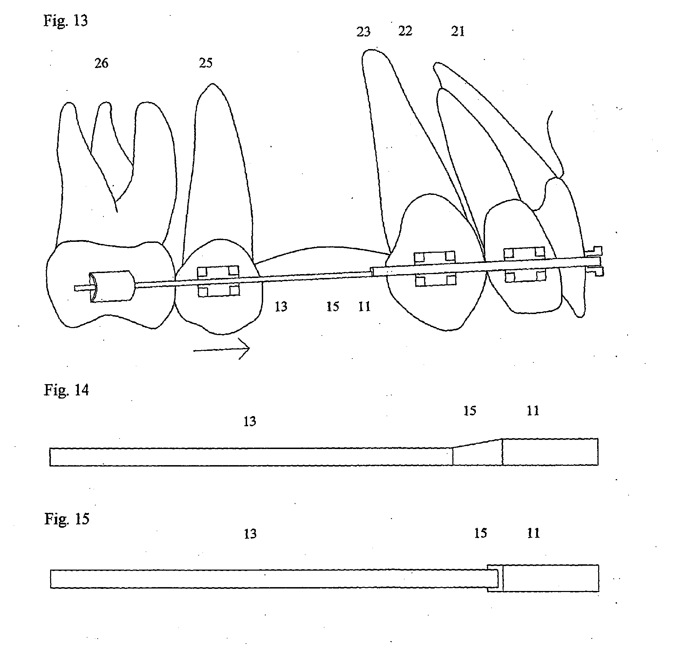

The "differential archwire" can be utilized also in the clinical cases where the first premolars are extracted, in order to create space in the dental arches to align crowded teeth. In the clinical practice usually the first premolars are extracted, and then the canines are moved backwards in order to align the incisors. At this point, if residual space remains in the dental arches, many clinicians prefer to keep the position of incisors and canines unchanged, and to close the residual space by means of the advancement of the second premolars and of the molars. In this phase of treatment a differential archwire can be utilized, presenting the anterior segment with big cross-section area 11 occupying the brackets of the incisors 21,22 and canines 23, and the posterior segments 12,13 with small cross-section area occupying the brackets of the second premolars 25 and of the molars 26 (fig. 13). The anterior segment of the archwire with big cross-section area 11 gives good control to the inclination of the incisors and of the canines, while the second premolars and the molars can slide forward, under the effect of the class I force, and close the residual space of extraction. The posterior segments 12, 13 with small cross-section area generate low friction in the slot of the premolars and molars. Furthermore, the anterior segment of the archwire with big cross section-area 11, that runs from canine to canine, resists the centripetal forces and helps to keep a correct transversal diameter of the dental arches. This control of the transversal diameter of the dental arches is increased by the fact that the shape of the cross-section of the archwire is rectangular with the long side of the rectangle placed along the horizontal plane, both in the anterior segment 11 and in the posterior segments 12,13 of the archwire (fig. 4).

### BRIEF DESCRIPTION OF DRAWINGS

FIG. 1
   Differential archwire, view from top
   11= anterior segment of the differential archwire
   12-13= posterior segments of the differential archwire
   14-15= transition points between anterior and posterior segments
FIG. 2
   Differential archwire, lateral view
   11= anterior segment
   13= posterior segment
   15= transition point between anterior and posterior segment
FIG.3
   Differential archwire, frontal view
   11= anterior segment
   12-13= posterior segments
   14-15= transition points between anterior and posterior segments
FIG. 4
   Differential archwire, perspective view
   11= anterior segment
   12-13= posterior segments
   14-15= transition points between anterior and posterior segments
FIG. 5
   Lateral view of the incisor and of the molar, showing the loss of torque control of the incisor
   51= center of resistance of the incisor
   21= incisor
   26= molar
   28= occlusal plane
FIG. 6
   Lateral view of the appliance in place
   11= anterior segment
   13= posterior segment
   15= transition point between anterior and posterior segment
   21= central incisor
   22= lateral incisor
   23= canine
   24= first premoalr
   25= second premolar
   26= molar
FIG. 7
   Lateral view of the cross-section of the anterior segment of the wire that completely fills the slot of the brackets of the incisors
   11= anterior segment of the differential archwire, view of the section
   21= incisor
   41= incisor bracket
FIG. 8
   Lateral view of the posterior segment with small cross-section area, that occupies the slot of the brackets of canine, premolars and molars
   11= anterior segment of the differential archwire
   13= posterior segment of the differential archwire
   15= transition point between anterior and posterior segment
   23= canine
   24= first premolar
   25= second premolar
   26= molar
FIG. 9
   Backwards translation of the incisor, lateral view
   21= incisor
   23= canine
   24= first premolar
   25= second premolar
   26= molar
FIG. 10
   Frontal view of the differential archwire, wherein a step is created between the anterior and the posterior segments of the archwire
   11= anterior segment
   12-13= posterior segments
   14-15= transition points between anterior and posterior segments
   16-17= bends placed on the archwire
FIG. 11
   Lateral view of the appliance in place, wherein a step is created between anterior and posterior segments
   11= anterior segment
   13= posterior segment
   15= transition point between anterior and posterior segment
   17= bend placed on the archwire
   21= central incisor
   22= lateral incisor
   23= canine
   24= first premolar
   25= second premolar
   26= molar
   29= bracket of the canine
FIG. 12
   Lateral view of the incisor: moment created by the step placed between anterior and posterior segments of the archwire
   51= center of resistance of the incisor
   21= incisor
   31= arm
FIG. 13
   Lateral view of the appliance in place: in clinical cases with extraction of the first premolars the anterior segment with big cross-section area extends from canine to canine
   11= anterior segment
   13= posterior segment
   15= transition point between anterior and posterior segments
   21= central incisor
   22= lateral incisor
   23= canine
   25= second premolar
   26= molar
FIG. 14
   Lateral view of the differential archwire, wherein the transition between anterior and posterior segments is gradual
   11= anterior segment
   13= posterior segment
   15= transition point between anterior and posterior segments
FIG. 15
   Lateral view of the differential archwire, with concentric anterior and posterior segments
   11= anterior segment
   13= posterior segment
   15= transition point between anterior and posterior segments

## Claims

1. An orthodontic appliance comprising a differential archwire, said archwire comprising an anterior segment (11) with a big cross-section area, and by two posterior segments (12,13) with smaller cross-section area, **characterized in that** orthodontic appliance comprises anterior brackets for attaching to incisors, and posterior brackets for attaching to canines, premolars, and molars, wherein said anterior segment (11) is adapted for insertion into and completely filling slots of the anterior brackets, and said posterior segments (12,13) are adapted for insertion into slots of the posterior brackets, whereby the small area of the cross-section of the posterior segments (12,13) allows the archwire to slide along the posterior brackets.

2. The orthodontic appliance according to claim 1, wherein said anterior segment (11) and said posterior segments (12,13) are constituted by stainless steel.

3. The orthodontic appliance according to claim 1, wherein the cross-section of said anterior segment (11) and said posterior segments (12,13) is rectangular with the long side of the rectangle placed along the horizontal plane.

4. The orthodontic appliance according to claim 1, wherein the cross-section of said anterior segment (11) and said posterior segments (12,13) is a polygon or a trapezium.

5. The orthodontic appliance according to claim 1, wherein the cross-section of the archwire has beveled angles.

6. The orthodontic appliance according to claim 1, wherein a step formed by two bends (16,17) is formed between said anterior segment (11) and said posterior segments (12,13).

7. The orthodontic appliance according to claim 1, wherein gradual transition point (14,15) is formed between said anterior segment (11) and said posterior segments (12,13).

8. The orthodontic appliance according to claim 1, wherein said posterior segments (12,13) are concentric with respect to said anterior segment (11).

9. The orthodontic appliance according to claim 1, wherein said anterior segment (11) and said posterior segments (12,13) are constituted by nickel-titanium or beta-titanium or TMA or CNA.

10. The orthodontic appliance according to claim 1, wherein it further comprises soldered or crimpable hooks added to said archwire.

11. The orthodontic appliance according to claim 1, wherein the archwire is obtained by means of soldering or brazing or overlapping and clamping through crimpable tubes of said anterior segment (11) with said posterior segments (12,13).

12. The orthodontic appliance according to claim 1, wherein two small bumps are provided each in the transition points (14,15) between said anterior segment (11) with said posterior segments (12,13).

13. The orthodontic appliance according to claim 1, wherein marks are provided on the archwire for distinguishing said anterior segment (11) from said posterior segments (12,13).

14. The orthodontic appliance according to claim 1, wherein cross-section dimensions of the slots are the same in all said brackets.

15. The orthodontic appliance according to claim 1, wherein said anterior segment (11) is more rigid than said posterior segments (12,13), and said posterior segments (12,13) are more flexible than said said anterior segment (11).

## Patentansprüche

1. Orthodontische Apparatur, die einen Differential-Bogendraht umfasst, der ein vorderes Segment (11) mit einer großen Querschnittsfläche und zwei hintere Segmente (12, 13) mit kleinerer Querschnittsfläche umfasst, **dadurch gekennzeichnet, dass** die orthodontische Apparatur vordere Klammern zum Befestigen an Schneidezähnen und hintere Klammern zum Befestigen an Eckzähnen, vorderen Backenzähnen und Backenzähnen umfasst, wobei das vordere Segment (11) zum Einführen in und vollständiges Ausfüllen von Schlitzen der vorderen Klammern geeignet ist, und die hinteren Segmente (12, 13) zum Einführen in Schlitzen der hinteren Klammern geeignet sind, wobei es die kleine Fläche des Querschnitts der hinteren Segmente (12, 13) dem Bogendraht erlaubt, entlang der hinteren Klammern zu gleiten.

2. Orthodontische Apparatur nach Anspruch 1, bei der das vordere Segment (11) und die hinteren Segmente (12, 13) aus rostfreiem Stahl bestehen.

3. Orthodontische Apparatur nach Anspruch 1, bei der der Querschnitt des vorderen Segmentes (11) und der hinteren Segmente (12, 13) rechteckig ist, wobei die lange Seite des Rechtecks entlang der horizontalen Ebene angeordnet ist.

4. Orthodontische Apparatur nach Anspruch 1, bei der der Querschnitt des vorderen Segmentes (11) und der hinteren Segmente (12, 13) ein Polygon oder Trapez ist.

5. Orthodontische Apparatur nach Anspruch 1, bei der der Querschnitt des Bogendrahtes abgeschrägte Kanten aufweist.

6. Orthodontische Apparatur nach Anspruch 1, bei der zwischen dem vorderen Segment (11) und den hinteren Segmenten (12, 13) eine Stufe durch zwei Biegungen (16, 17) geformt ist.

7. Orthodontische Apparatur nach Anspruch 1, bei der zwischen dem vorderen Segment (11) und den hinteren Segmenten (12, 13) ein gradueller Übergangspunkt (14, 15) geformt ist.

8. Orthodontische Apparatur nach Anspruch 1, bei der die hinteren Segmente (12, 13) in Bezug auf das vordere Segment (11) konzentrisch sind.

9. Orthodontische Apparatur nach Anspruch 1, bei der das vordere Segment (11) und die hinteren Segmente (12,13) aus Nickel-Titan oder Beta-Titan oder TMA oder CNA bestehen.

10. Orthodontische Apparatur nach Anspruch 1, bei der sie zudem gelötete oder zusammendrüokbare Haken aufweist, die zum Bogendraht hinzugefügt sind.

11. Orthodontische Apparatur nach Anspruch 1, bei der der Bogendraht durch Lösten oder Hartlöten oder überdecken und Klammern von zusammendrückbaren Röhren des vorderen Segmentes (11) mit den hinteren Segmenten (12, 13) erhalten wird.

12. Orthodontische Apparatur nach Anspruch 1, bei der zwei kleine Unebenheiten in jedem Übergangspunkt (14, 15) zwischen dem vorderen Segment (11) und den hinteren Segmenten (12, 13) vorgesehen sind.

13. Orthodontische Apparatur nach Anspruch 1, bei der Markierungen am Bogendraht vorgesehen sind, um das vordere Segment (11) von den hinteren Segmenten (12, 13) zu unterscheiden.

14. Orthodontische Apparatur nach Anspruch 1, bei der die Dimensionen der Querschnitte der Schlitze in allen Klammern gleich sind.

15. Orthodontische Apparatur nach Anspruch 1, bei der das vordere Segment (11) starrer als die hinteren Segmente (12, 13) sind und die hinteren Segmente (12, 13) flexibler sind als das vordere Segment (11).

## Revendications

1. Appareil orthodontique comportant un fil d'arc différentiel, ledit fil d'arc comportant un segment antérieur (11) avec une grande aire de section transversale, et deux segments postérieurs (12, 13) avec une aire de section transversale plus petite, **caractérisé en ce que** l'appareil orthodontique comporte des consoles antérieures pour une fixation sur des incisives, et des consoles postérieures pour une fixation sur des canines, des prémolaires et des molaires, dans lequel ledit segment antérieur (11) est adapté pour une insertion dans des fentes des consoles antérieures et pour remplir entièrement celles-ci, et lesdits segments postérieurs (12, 13) sont adaptés pour une insertion dans des fentes des consoles postérieures, de sorte que la petite surface de la section transversale des segments postérieurs (12, 13) permet au fil d'arc de glisser le long des consoles postérieures .

2. Appareil orthodontique selon la revendication 1, dans lequel ledit segment antérieur (11) et lesdits segments postérieurs (12, 13) sont constitués d'acier inoxydable.

3. Appareil orthodontique selon la revendication 1, dans lequel la section transversale dudit segment antérieure (11) et desdits segments postérieurs (12, 13) est rectangulaire avec le côté long du rectangle placé le long du plan horizontal.

4. Appareil orthodontique selon la revendication 1, dans lequel la section transversale dudit segment antérieur (11) et desdits segments postérieurs (12, 13) est un polygone ou un trapèze.

5. Appareil orthodontique selon la revendication 1, dans lequel la section transversale du fil d'arc a des angles biseautés.

6. Appareil orthodontique selon la revendication 1, dans lequel un gradin formé par deux coudes (16, 17) est formé entre ledit segment antérieur (11) et lesdits segments postérieurs (12, 13).

7. Appareil orthodontique selon la revendication 1, dans lequel un point de transition graduelle (14, 15) est formé entre ledit segment antérieur (11) et lesdits segments postérieurs (12, 13).

8. Appareil orthodontique selon la revendication 1, dans lequel lesdits segments postérieurs (12, 13) sont concentriques par rapport audit segment antérieur (11).

9. Appareil orthodontique selon la revendication 1, dans lequel ledit segment antérieur (11) et lesdits segments postérieurs (12, 13) sont constitués de nickel-titane ou de bêta-titane ou de TMA ou de CNA.

10. Appareil orthodontique selon la revendication 1, dans lequel il comporte en outre des crochets brasés ou sertissables ajoutés audit fil d'arc.

11. Appareil orthodontique selon la revendication 1, dans lequel le fil d'arc est obtenu au moyen d'un brasage tendre ou d'un brasage fort ou d'un chevauchement et d'un serrage à travers des tubes sertissables dudit segment antérieur (11) avec lesdits segments postérieurs (12, 13).

12. Appareil orthodontique selon la revendication 1, dans lequel de petits bossages sont disposés chacun dans les points de transition (14, 15) entre ledit segment antérieur (11) et lesdits segments postérieurs (12, 13).

13. Appareil orthodontique selon la revendication 1, dans lequel des marques sont disposées sur le fil d'arc pour distinguer ledit segment antérieur (11) desdits segments postérieurs (12, 13).

14. Appareil orthodontique selon la revendication 1, dans lequel des dimensions de section transversale des fentes sont les mêmes dans toutes lesdits consoles.

15. Appareil orthodontique selon la revendication 1, dans lequel ledit segment antérieur (11) est plus rigide que lesdits segments postérieurs (12, 13), et lesdits segments postérieurs (12, 13) sont plus souples que ledit segment antérieur (11).
